# EUROPÄISCHE PATENTANMELDUNG

(11) **EP 0 878 657 A2**
(43) Veröffentlichungstag der Anmeldung: **18.11.1998**
(21) Anmeldenummer: 98108416.3
(22) Anmeldetag: 08.05.1998
(51) Int. Cl.: F16N 7/36

(54) **Schmiervorrichtung**

(30) Priorität: 17.05.1997 DE 19720950
(71) Anmelder: SAME DEUTZ-FAHR S.P.A., 24047 Treviglio (Bergamo) (IT)
(72) Erfinder: Berghorn, Hermann, 89426 Wittislingen (DE); Mayershofer, Michael, 89407 Dillingen (DE)
(74) Vertreter: Quinterno, Giuseppe

(57) **Zusammenfassung**

Die Erfindung betrifft eine Schmiervorrichtung, insbesondere für eine Gelenkwelle (1), die mindestens ein Kreuzgelenk (28) mit einer Gelenkgabel (4) und einem Gelenkkreuz (5) sowie mit schmierbaren Gelenklagern (5a) aufweist. Kreuzgelenke müssen regelmäßig geschmiert werden, wenn sie eine hohe Lebensdauer erreichen sollen. Bei schwer zugänglichen Kreuzgelenken wird oft gegen diese Vorschrift verstoßen mit entsprechenden Folgen für die Lebensdauer derselben.

Dieser Nachteil wird dadurch behoben, daß zur Überbrückung der Drehung der Gelenkwelle (1) ein gehäusefestes Bauteil vorgesehen ist, durch das der Schmierstoff zur Gelenkwelle (1) und durch diese hindurch mittels eines Übertragungselementes zu den Gelenklagern (5a) geführt ist.

## Beschreibung

Die Erfindung betrifft eine Schmiervorrichtung, insbesondere für eine Gelenkwelle, nach dem Oberbegriff des Anspruchs 1.

Bei landwirtschaftlichen Maschinen gibt es zahlreiche Antriebe mittels Gelenkwellen. Deren Kreuzgelenke bedürfen einer regelmäßigen Schmierung, um eine angemessene Lebensdauer zu gewährleisten. Die Schmierung geschieht über Schmiernippel an den Gelenkkreuzen. Sind diese, wie im Falle des Körnerelevators eines Mähdreschers, schwer zugänglich, werden die Schmierintervalle oft nicht eingehalten oder ganz versäumt, was zu raschen Ausfällen der Kreuzgelenke führt.

Der Erfindung liegt die Aufgabe zugrunde, das Abschmieren von Gelenkwellen mit Kreuzgelenken zu vereinfachen.

Die Aufgabe wird dadurch gelöst, daß zur Überbrückung der Drehung der Gelenkwelle ein gehäusefestes Bauteil vorgesehen ist, durch das der Schmierstoff zur Gelenkwelle und durch diese hindurch mittels eines Übertragungselementes zu den Gelenklagern geführt ist. Dadurch erfolgt die Schmierung von einem stationären Bauteil aus, so daß diese unabhängig von der Bewegung der Gelenkwelle erfolgen kann. Die Schmierstelle ist leicht zugänglich und zum Anschluß an eine Zentralschmierung geeignet.

Es ist vorteilhaft, wenn das gehäusefeste Bauteil als eine am Umfang der Gelenkwelle angeordnete, radiale Drehdurchführung oder als eine am freien Ende der Gelenkwelle angeordnete axiale Drehdurchführung ausgebildet ist. Auf diese Weise kann der Schmierstoff je nach Einbausituation der Gelenkwelle dieser entweder radial oder axial zugeführt werden.

Wenn das Übertragungselement eine Druckleitung ist, die als Kunststoffleitung oder als elastische Metalleitung ausgebildet ist, besteht eine elastische Verbindung zum Kreuzgelenk, die in der Lage ist, die durch Bewegung des Kreuzgelenks verursachten Bewegungen der Druckleitung ohne bleibende Verformung derselben aufzunehmen.

Von Vorteil ist, daß die Druckleitung zumindest teilweise in einer zur Gelenkwelle konzentrisch ausgebildeten Öffnung derselben angeordnet ist, die auf der Kreuzgelenkseite eine Durchmessererweiterung und auf der kreuzgelenkfernen Seite ein Gewinde für eine Schraube aufweist. Dadurch ist Raum für die Bewegungen der Druckleitung gegeben.

Dadurch, daß die Schraube eine koaxiale Durchgangsbohrung aufweist, deren Durchmesser mit Spiel dem Außendurchmesser der Druckleitung entspricht, besteht die Möglichkeit einer Führung oder Fixierung der Druckleitung an der Gelenkwelle.

Durch eine vorteilhafte Weiterbildung der Erfindung wird erreicht, daß die Kunststoffleitung zumindest in der Durchgangsbohrung axial beweglich geführt ist und diese beidseitig durchragt und daß die Kunststoffleitung mit der Mitte des Gelenkkreuzes druckdicht verbunden ist sowie an ihrem freien Ende die axiale Drehdurchführung trägt. Auf diese Weise ist die erforderliche Bewegungsfreiheit der Kunststoffleitung und die Verbindung zwischen axialer Drehdurchführung und Gelenkkreuz sichergestellt.

Es hat Vorzüge, wenn die axiale Drehdurchführung am kreuzgelenkfernen Ende der Schraube und die Metalleitung in oder am kreuzgelenkseitigen Ende der Durchgangsbohrung sowie am Gelenkkreuz druckdicht befestigt sind und daß der freistehende Teil der Metalleitung ein Längenübermaß aufweist. Dadurch ist eine druckdichte Verbindung zwischen axialer Drehdurchführung und Gelenkkreuz und die für die Metalleitung erforderliche Bewegungsfreiheit gegeben.

Wenn die Metalleitung durch eine Hälfte der Gelenkgabel nach außen und von dort zurück in die Gelenklagerbüchse von deren Gelenklager druckdicht geführt ist, entstehen keine Relativbewegungen der Metalleitung zur Gelenkwelle, so daß diese auch aus weniger elastischem Material gefertigt werden kann.

Eine vorteilhafte Ausbildung der Erfindung besteht darin, daß die radiale Drehdurchführung einen von Dichtungen begrenzten Ringraum aufweist, wobei die Dichtungen auf dem Umfang der Gelenkwelle dichtend gleiten und der Ringraum in Strömungsverbindung mit einer gehäusefesten Schmiermittelzuführeinrichtung sowie mit einer gelenkwellenseitigen Radialbohrung stehen, die zu der Metalleitung führt. Auf diese Weise besteht die Möglichkeit einer radialen Schmierstoffzufuhr zur Gelenkwelle, die eine besonders einfache Lösung darstellt.

Vorteilhaft ist, daß die Druckleitung durch das Gelenkkreuz hindurch zu mindestens einem weiteren Gelenkkreuz geführt ist, wobei die Druckleitung auch zwischen den Gelenkkreuzen ein Längenübermaß aufweist. Dadurch können mehrere Kreuzgelenke einer Gelenkwelle von einem Punkt aus geschmiert werden. Die Bewegungen der elastischen Metalleitungen werden durch das erforderliche Längenübermaß derselben ermöglicht.

Es bietet Vorteile, wenn eines der Kreuzgelenke eines Körnerelevators durch dessen Gelenkwelle, das andere durch die Elevatorwelle über entsprechende Druckleitungen schmierbar sind. Auf diese Weise ist das Abschmieren dieser schwer zugänglichen Kreuzgelenke problemlos. Die getrennten Schmierstoffleitungen können außerhalb des Korntanks zusammengeführt werden.

Weitere Merkmale der Erfindung ergeben sich aus der folgenden Beschreibung und der Zeichnung, in der Ausführungsbespiele der Erfindung schematisch dargestellt sind. Es zeigen:
- Figur 1:: Querschnitt durch eine Gelenkwelle (1) mit Kreuzgelenk (28), axialer Drehdurchführung (15) und Kunststoffleitung (14) zum Gelenkkreuz (5),
- Figur 2:: Querschnitt durch eine Gelenkwelle (1) mit Kreuzgelenk (28), axialer Drehdurchführung (15) und elastischer Metalleitung (17) zum Gelenkkreuz (5),
- Figur 2a:: Wie Fig. 2, jedoch mit veränderter Befestigung der Metalleitung (17),
- Figur 3:: Wie Fig. 2, jedoch mit Metalleitung (17) zur Gelenklagerbüchse (18) geführt,
- Figur 4:: Wie Fig. 2, jedoch mit radialer Drehdurchführung (19),
- Figur 5:: Schnitt durch einen Körnerelevator (25).

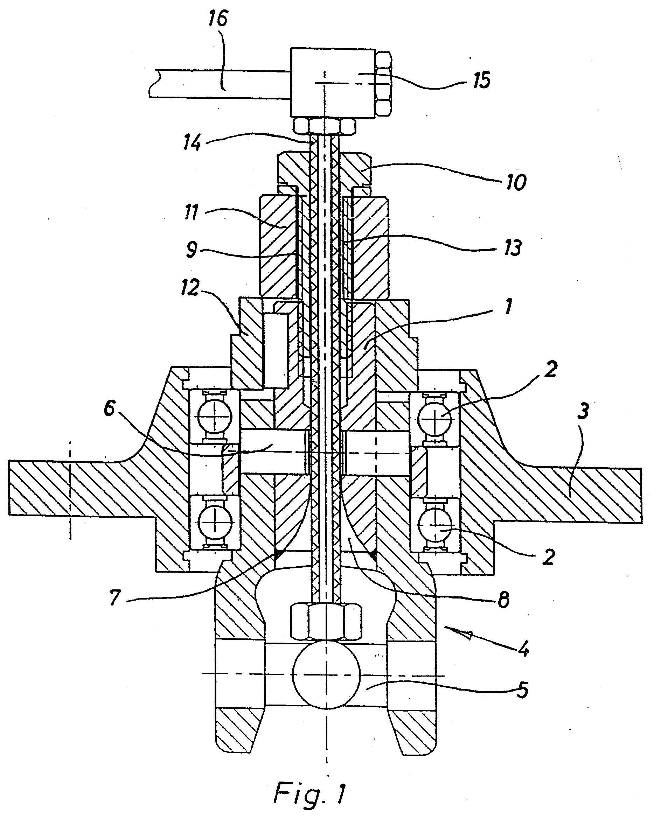

In Figur 1 ist eine Gelenkwelle 1 dargestellt, die mittels zweier Kugellager 2 in einem Gehäuse 3 gelagert ist. Die Gelenkwelle 1 weist an einem Ende eine Gelenkgabel 4 auf, in der ein Gelenkkreuz 5 in Gelenklagern 5a gelagert ist. Die Gelenkgabel 4 ist durch Scherstifte 6 und eine Schweißnaht 7 mit der Gelenkwelle 1 fest verbunden.

Die Gelenkwelle 1 weist eine konzentrisch angeordnete Öffnung 8 auf, mit einer Durchmessererweiterung auf der Kreuzgelenkseite und einem Gewinde 9 für eine Schraube 10 an der kreuzgelenkfernen Seite.

Die Schraube 10 verspannt die Gelenkwelle 1 über ein Distanzstück 11 und einen Antriebsring 12 mit den Kugellagern 2. Sie weist eine konzentrische Durchgangsbohrung 13 auf, deren Durchmesser geringfügig größer als der Außendurchmesser einer als Kunststoffleitung 14 ausgebildeten Druckleitung ist. Aufgrund des Radialspiels kann sich diese in der Durchgangsbohrung 13 axial bewegen.

Die Kunststoffleitung 14 ist mit der Mitte des Gelenkkreuzes 5 und dessen nicht dargestellten, zu den Gelenklagern 5a führenden Innenbohrungen verbunden. Sie trägt an ihrem kreuzgelenkfernen Ende eine axiale Drehdurchführung 15, die eine gehäusefeste Zufuhrleitung 16 für den Schmierstoff aufweist und so die Verbindung einer nicht dargestellten, gehäusefesten Abschmierstelle mit der sich drehenden Gelenkwelle 1 und deren Gelenklagern 5a herstellt. Die Durchmessererweiterung der Öffnung 8 und die axiale Beweglichkeit der Kunststoffleitung 14 gestatten die beim Schwenken des Gelenkkreuzes auftretende Bewegung derselben.

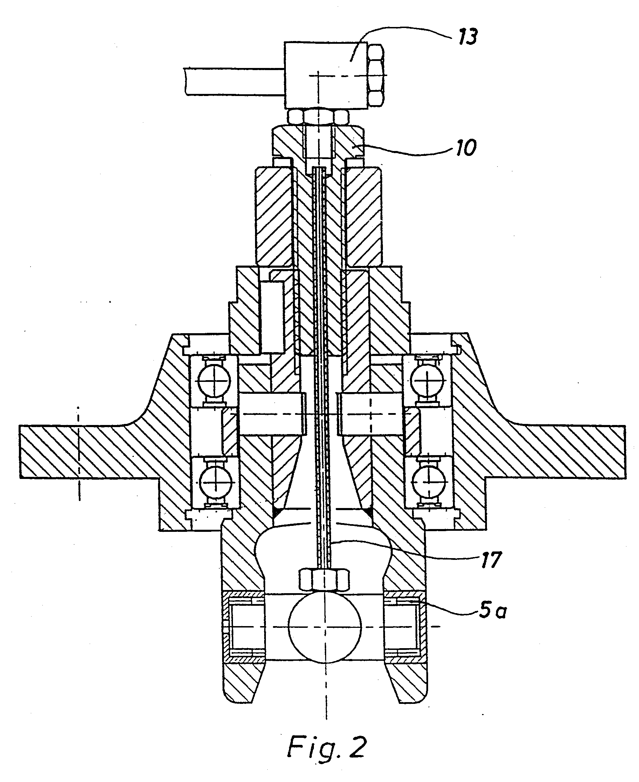

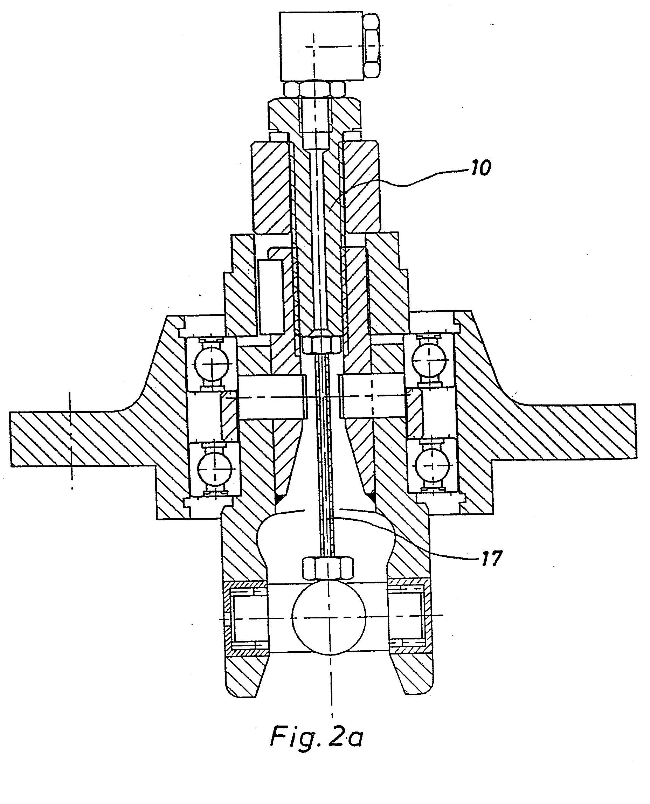

Figur 2 zeigt den grundsätzlich gleichen Aufbau der Gelenkwelle 1 wie Figur 1. Hierbei ist die axiale Drehdurchführung 15 an der Schraube 10 befestigt. Die Druckleitung ist als elastische Metalleitung 17 ausgebildet. Diese endet in der Durchgangsbohrung 13 und ist mit dieser durch Verschrauben oder Kleben oder Löten druckdicht verbunden. Das andere Ende der elastischen Metalleitung 17 ist an dem Gelenkkreuz druckdicht befestigt. Deren Zwangsbewegung wird durch die Durchmessererweiterung der Öffnung 8 und ein Übermaß des freistehenden Teils derselben ermöglicht. Dadurch ist ein Ausweichen der Metalleitung aus der Achse der Gelenkwelle 1 bewirkt, die zu axialer Beweglichkeit führt.

Figur 2a unterscheidet sich von Figur 2 nur durch die Befestigung der elastischen Metalleitung 17 an der kreuzgelenkseitigen Stirnseite der Schraube 10.

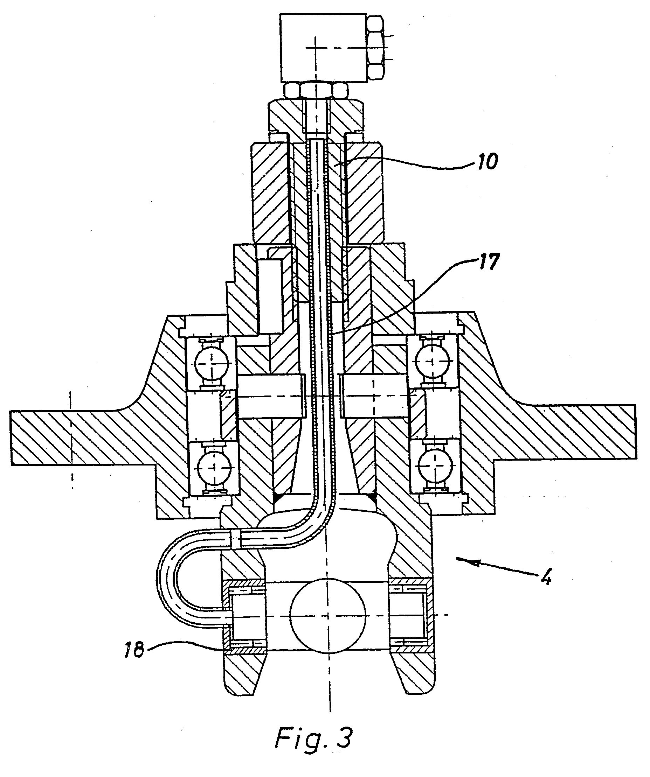

Figur 3 zeigt eine Lösung, bei der die Druckleitung nicht zum Gelenkkreuz 5, sondern durch eine der beiden Hälften der Gelenkgabel 4 nach außen und zurück zu einem Lagergehäuse 18 des Gelenklagers 5a geführt ist. Ein Vorteil dieser Lösung besteht darin, daß die Druckleitung keine Relativbewegung zur Gelenkwelle 1 ausführt. Sie kann deshalb auch aus weniger elastischem Material bestehen.

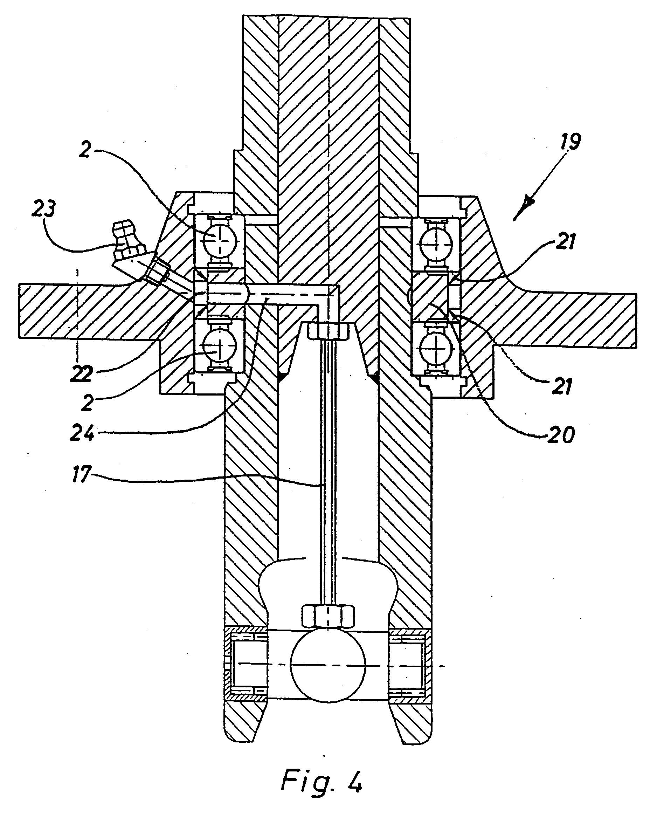

In Figur 4 ist eine radiale Drehdurchführung 19 gezeigt. Diese weist einen gelenkwellenfesten Distanzring 20 für die Kugellager 2 auf, dessen Umfang als Gleitfläche für zwei gehäusefeste Dichtungen 21 dient. Zwischen diesen befindet sich ein Ringraum 22, der in Strömungsverbindung mit einer gehäusefesten Schmiermittelzufuhreinrichtung 23, hier eines Schmiernippels, und mit einer gelenkwellenseitigen Radialbohrung 24 steht, die zu der elastischen Metalleitung 17 führt. Diese Lösung ist einfach und platzsparend.

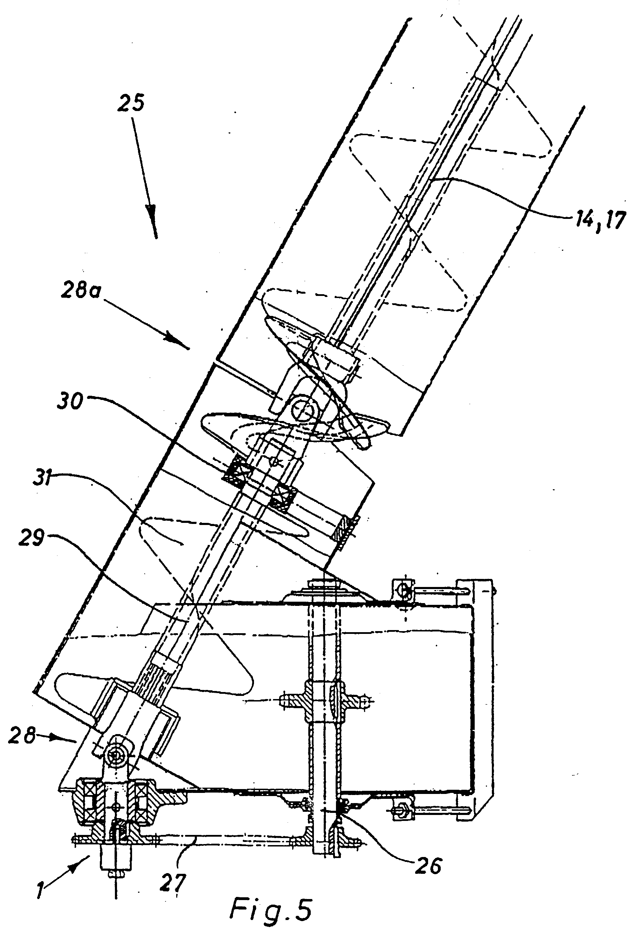

Figur 5 zeigt einen Körnerelevator 25, mit einer Antriebswelle 26, von der die Gelenkwelle 1 mittels einer Kette 27 angetrieben wird. Über ein Kreuzgelenk 28 wird eine Elevatorwelle 29 angetrieben, die in einem Zwischenlager 30 gelagert ist und ein weiteres Kreuzgelenk 28a aufweist. Die Elevatorwelle 29 trägt eine Transportspirale 30 für das Getreide. Das Schmiermittel wird durch nicht dargestellte axiale oder radiale Drehdurchführungen in die Gelenkwelle 1 und in das freie Ende der Elevatorwelle 29 eingeführt und gelangt entsprechend den Figuren 1 bis 4 zu den Gelenklagern 5a. Auf diese Weise können die Kreuzgelenke 28, 28a auch bei laufendem Gerät bequem von Hand oder sogar durch eine Zentralschmierung geschmiert werden, bei der alle Schmierstellen des Mähdreschers zusammenlaufen.

Eine andere nicht dargestellte Möglichkeit besteht darin, die Druckleitung durch das Gelenkkreuz hindurchzuführen und auf diese Weise weitere Kreuzgelenke der gleichen Gelenkwelle von einem Punkt aus zu schmieren.

## Patentansprüche

1. Schmiervorrichtung, insbesondere für eine Gelenkwelle (1), die mindestens ein Kreuzgelenk (28) mit einer Gelenkgabel (4) und einem Gelenkkreuz (5) sowie mit schmierbaren Gelenklagern (5a) aufweist,
**dadurch gekennzeichnet**, daß zur Überbrückung der Drehung der Gelenkwelle (1) ein gehäusefestes Bauteil vorgesehen ist, durch das der Schmierstoff zur Gelenkwelle (1) und durch diese hindurch mittels eines Übertragungselementes zu den Gelenklagern (5a) geführt ist.

2. Schmiervorrichtung nach Anspruch 1,
**dadurch gekennzeichnet**, daß das gehäusefeste Bauteil als eine am Umfang der Gelenkwelle (1) angeordnete, radiale Drehdurchführung (19) oder als eine am freien Ende der Gelenkwelle (1) angeordnete axiale Drehdurchführung (15) ausgebildet ist.

3. Schmiervorrichtung nach Anspruch 1 und 2,
**dadurch gekennzeichnet**, daß das Übertragungselement eine Druckleitung ist, die als Kunststoffleitung (14) oder als elastische Metalleitung (17) ausgebildet ist.

4. Schmiervorrichtung nach Anspruch 3,
**dadurch gekennzeichnet**, daß die Druckleitung zumindest teilweise in einer zur Gelenkwelle (1) konzentrisch ausgebildeten Öffnung (8) derselben angeordnet ist, die auf der Kreuzgelenkseite eine Druchmessererweiterung und auf der kreuzgelenkfernen Seite ein Gewinde (9) für eine Schrauben (10) aufweist.

5. Schmiervorrichtung nach Anspruch 4,
**dadurch gekennzeichnet**, daß die Schraube (10) eine koaxiale Durchgangsbohrung (13) aufweist, deren Durchmesser mit Spiel dem Außendurchmesser der Druckleitung entspricht.

6. Schmiervorrichtung nach Anspruch 3 und 5,
**dadurch gekennzeichnet**, daß die Kunststoffleitung (14) zumindest in der Durchgangsbohrung (13) axial beweglich geführt ist und diese beidseitig durchragt und daß die Kunststoffleitung (14) mit der Mitte des Gelenkkreuzes (5) druckdicht verbunden ist sowie an ihrem freien Ende die axiale Drehdurchführung (15) trägt.

7. Schmiervorrichtung nach Anspruch 3 und 5,
**dadurch gekennzeichnet**, daß die axiale Drehdurchführung (15) am kreuzgelenkfernen Ende der Schraube (10) und die Metalleitung (17) in oder am kreuzgelenkseitigen Ende der Durchgangsbohrung (13) sowie am Gelenkkreuz (5) druckdicht befestigt sind und daß der freistehende Teil der Metalleitung (17) ein Längenübermaß aufweist.

8. Schmiervorrichtung nach Anspruch 3 und 5,
**dadurch gekennzeichnet**, daß die Metalleitung (17) durch eine Hälfte der Gelenkgabel (4) nach außen und von dort zurück in die Gelenklagerbüchse (18) von deren Gelenklager (5a) druckdicht geführt ist.

9. Schmiervorrichtung nach Anspruch 2,
**dadurch gekennzeichnet**, daß die radiale Drehdurchführung (19) einen von Dichtungen (21) begrenzten Ringraum (22) aufweist, wobei die Dichtungen (21) auf dem Umfang der Gelenkwelle (1) dichtend gleiten und der Ringraum (22) in Strömungsverbindung mit einer gehäusefesten Schmiermittelzufuhreinrichtung (23) sowie mit einer gelenkwellenseitigen Radialbohrung (24) stehen, die zu der Metalleitung (17) führt.

10. Schmiervorrichtung nach Anspruch 6 bis 9,
**dadurch gekennzeichnet**, daß die Druckleitung durch das Gelenkkreuz (5) hindurch zu mindestens einem weiteren Gelenkkreuz (5) geführt ist, wobei die Druckleitung auch zwischen den Gelenkkreuzen (5) ein Längenübermaß aufweist.

11. Schmiervorrichtung nach Anspruch 1,
**dadurch gekennzeichnet**, daß eines der Kreuzgelenke (28) eines Körnerelevators (25) durch dessen Gelenkwelle (1), das andere durch die Elevatorwelle (29) über je eine Drehdurchführung und entsprechende Druckleitungen schmierbar sind.
